# EUROPEAN PATENT SPECIFICATION

(11) **EP 0 690 966 B1**
(45) Date of publication and mention of the grant of the patent: **17.12.1997**
(21) Application number: 94909950.1
(22) Date of filing: 22.03.1994
(51) Int. Cl.: F16K 5/06

(54) **VALVE**
VENTIL
VANNE

(30) Priority: 23.03.1993 FI 931293
(43) Date of publication of application: 10.01.1996
(73) Proprietor: Parma, Antero, 02271 Espoo (FI)
(72) Inventor: Parma, Antero, 02271 Espoo (FI)
(74) Representative: Helino, Timo Kalervo
(86) International application number: FI9400105
(87) International publication number: WO9421945

(56) References cited:
- US-A- 3 357 680
- US-A- 4 339 110

## Description

The present invention concerns a valve as defined in the preamble to Claim 1, and known e.g. from US-A-4 339 110.

In process industry, for instance, in liquid and gas and water and effluent treatment plants, valves are used in great numbers, such valves being employed to control flows in desired manner. Existing valves are usually butterfly valves or spherical valves. Both are commonly used and widely known valve designs, which are reliable in operation in many applications.

Problems are encountered in existing butterfly valves, in the first place, in endevours to achieve adequate sealing, since particularly close to the axis of rotation of the butterfly flap the movements thereof are short, implying that special designs are required for the seals so that adequate sealing might be achieved. Such adequate sealing also implies comparatively expensive structures in butterfly valves.

Owing to their massive structure, spherical valves are primarily appropriate to be used in practical applications of smaller size, but in these valves, too, adequate sealing leads to designs which are comparatively expensive, and accurate in dimensions.

The object of the invention is to eliminate the drawbacks mentioned. Specifically, the object of the invention is to disclose a novel valve which is simpler of its construction, and therefore more advantageous to manufacture, than any valves known in the art.

Regarding the features characterizing the invention, reference is made to claim 1. Preferred embodiments of the invention are defined in the dependent claims.

The valve of the invention comprises a valve body with entry and exit passages and with a closing member disposed to be turnable in the valve body, the valve being closable and openable by means of this member, as desired. As taught by the invention, the closing member comprises two spherical calottes each less than a hemisphere, and a closing plate connecting them, its curved edges constituting a substantially smooth extension of said calottes' curvature so that when turned to be positioned crosswise in the valve body, the closing plate occludes the flow path from entry passage to exit passage. Thus, advantageously, the closing member of the invention has circular cross section when viewed along the closing plate, the periphery of the circle being formed by the arcs of the spherical calottes and the curved edges of the closing plate. Although in view of manufacturing techniques a completely round closing plate design is the most advantageous one, the invention is not exclusively confined thereto; other spherical or round-shaped designs are equally feasible.

The relative heights of the calottes and of the closing plate therebetween may vary individually in each instance. The height of the calotte is determined by adequate sealing area around the turning axis and by stable positioning of the closing member in the valve body or pipeline. On the other hand, the height of the closing member is as high as possible in order that flow resistance in the valve could be minimized. Thus, advantageously, the height of the spherical calotte is within 5-20% of the total height of the closing member.

Advantageously, a suitable sealing element is provided on the edges of the closing plate, which seals the closing member against the inner shell of the valve body.

In an advantageous embodiment of the invention the curved outer surfaces of the spherical calottes and the mating surfaces of the valve body have been fitted to match each other tightly so that they will be adequately sealed against each other free of any separate sealing elements. It is similarly also possible to fit the edges of the closing plate and the inner shell of the valve body (their mating surfaces) so that they will be adequately sealed against each other, free of any separate sealing elements, when the valve is closed.

In an advantageous embodiment of the invention a sealing element is provided between the curved outer surfaces of the spherical calottes and the mating surfaces of the valve body. In that case, possibly, no spherical cup-shaped mating surfaces are provided in the valve body; appropriate seals are instead furnished by round-shaped mating surfaces conforming to the spherical calottes.

In an advantageous embodiment of the invention the edges of the closing plate present grooves continuing substantially all around the closing member, in which case a sealing ring is placed in said groove, e.g. a teflon packing or a steel ring. It is equally feasible to inject a suitable sealing compound in the empty groove while the valve is closed, which compound will harden in the closed valve, thereby forming a sealing ring, whereafter the valve can be normally opened and closed.

In an advantageous embodiment of the invention both spherical calottes comprise concentric turning shafts, at least one of them extending out through the shell of the valve body and constituting a stem by which the valve can be turned. In another advantageous embodiment of the invention a protruding turning shaft with stem extending to the outside has been provided on one calotte only, while the other spherical calotte merely forms a round-shaped and smooth surface resting against the inner surface of the valve body.

In an advantageous embodiment of the invention the valve body consists of a straight tube inside which the closing member has been mounted in position in register with a hole through which the stem turning the closing member is placed. It is equally feasible to punch said hole only after the closing member has been installed, in which case the tube may at the same time be suitably pressed in the area around the closing member to be somewhat shaped to encircle the calottes.

In an advantageous embodiment of the invention a sealing element of suitable elastic material belongs in the apical calotte region of the closing member. In this case the side behind the sealing element may be connected by a passage with the pressure side of the valve so that in the closed valve the pressure prevailing on the pressure side will urge the sealing element against the valve body. Similarly, on the curved edges of the closing plate a sealing member may be provided of which the rear side communicates with the pressure side of the valve.

Advantageously, the valve of the invention is produced by merely pressure-forming the valve body of thin-walled tubular material around a calotte closing member according to the invention, whereby no other work steps are needed in making the valve. However, the valve of the invention is most easily produced by merely placing a closing member according to the invention in the pipe or tube and pressing the latter just enough to hold the closing member in position, and by connecting a suitable valve stem, piercing the pipe/tube, to the closing member for turning same.

It is also possible to produce a valve design according to the invention by injecting the calottes and the closing flap into the valve body in the form of compound which hardens in the valve body to become a completely sealing and finished closing member.

The valve design of the invention is exceedingly simple, perfectly sealing and reliable in operation, and its manufacturing is markedly more advantageous than that of presently known valves.

In the following the invention is described in detail, referring to the attached drawing, wherein
Fig. 1 presents a schematic sectional view of a valve according to the invention,
Fig. 2 presents schematically another valve according to the invention,
Fig. 3 presents schematically a third valve according to the invention,
Fig. 4 presents schematically a fourth valve according to the invention, and
Fig. 5 presents a closing member according to the invention.

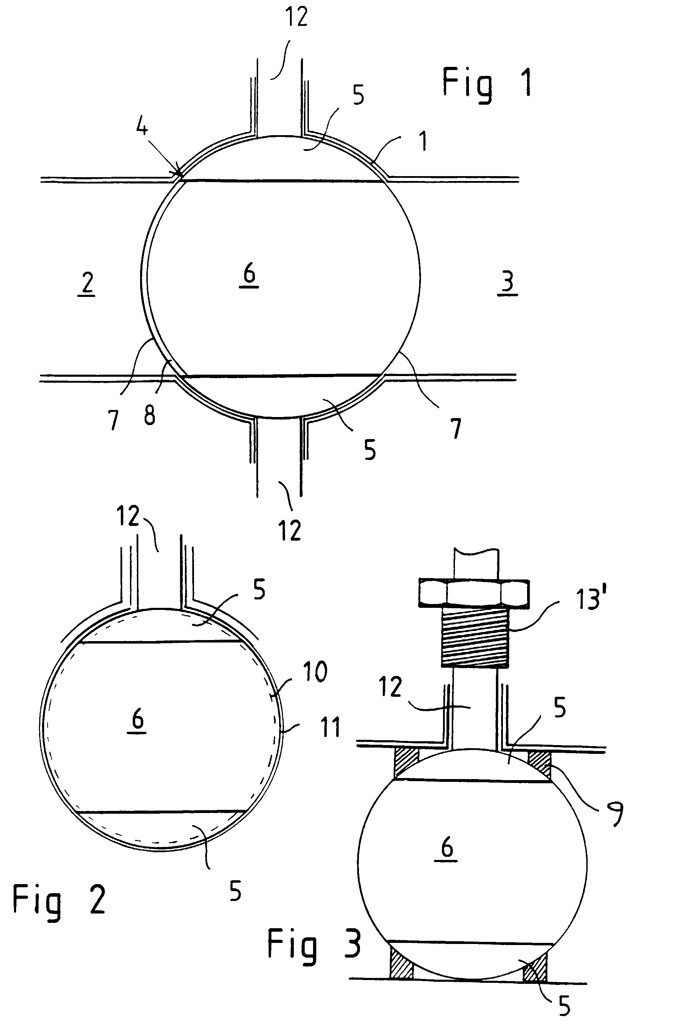

The valve depicted in Fig. 1 features a substantially spherical valve body 1, with entry passage 2 and exit passage 3, these being connectable to suitable pipelines, for instance. In the valve body has been placed a closing member 4, consisting of two spherical calottes 5 resting against the inner surfaces of the valve body and of a closing plate 6 connecting these calottes. The closing member 4 is open in Fig. 1, in which position the closing plate 6 is positioned substantially parallel to the entry and exit passages.

The circular edges 7 of the closing plate 6 constitute a smooth continuation to the round-shaped surfaces of the spherical calottes, so that in the embodiment here depicted the periphery of the closing member is a circle.

To both spherical calottes 5 are furthermore attached concentric turning shafts 12, which support the closing member 4 and by which the valve can be opened and closed. In this embodiment the surfaces of the spherical calottes 5 and the mating faces of the valve body 1 have been fitted together to produce so tight a seal that no separate sealing elements are required on these surfaces. In contrast, on the edge of the closing plate 6 a sealing element 8 has been provided which in the closed position is pressed against the mating surface of the valve body, thus sealing the closed valve. The sealing element may be located on the edge surface of the closing member or adjacent to the edge on the planar surface of the closing member, depending on the configuration of the valve body and on the mating surfaces.

The valve of Fig. 1 may be produced simply in that around the closing member 4 is merely wound and pressed a shell of suitably thin material which becomes moulded against the calotte surfaces, forming a valve body in which the closing member can turn with tight sealing.

In Fig. 2 is depicted another embodiment of the invention in which a turning shaft 12 for turning the valve has been attached to one of the spherical calottes 5 only. The other spherical calotte will then merely rest against a matching configuration of the valve body.

In the embodiment of Fig. 2 a circular packing groove 10 has been provided around the closing member, i.e, from one side of the turning shaft 12 along the spherical calottes and the edges of the closing plate 6, to extend up to the other side of the turning shaft, and this packing groove is furnished with a suitable sealing element 11. Depending on the particular application, one may use for this sealing element various metal rings, Teflon rings, or the sealing element may be installed in the valve in the form of a suitable compound which is injected, while the valve is closed, into the groove 10 at the point where it meets one side of the turning shaft 12, whereby the compound will fill the groove to accomplish tight sealing. After the compound has hardened or solidified, the valve can be normally opened and closed.

In Fig. 3 is depicted a third embodiment of the invention wherein the valve body itself has not been shaped to conform to the shape of the spherical calotte 5, instead of which in the valve body have been disposed suitable annular sealing elements 9, against which the spherical calotte(s) 5 rest(s), thereby sealing the pressurized internal space of the valve body from the turning shaft 12. A similar annular sealing element 9 may equally be provided on the lower calotte. In this embodiment, advantageously, a packing gland 13' is used on the turning shaft, with which the calotte is pressed tightly against the sealing element 9.

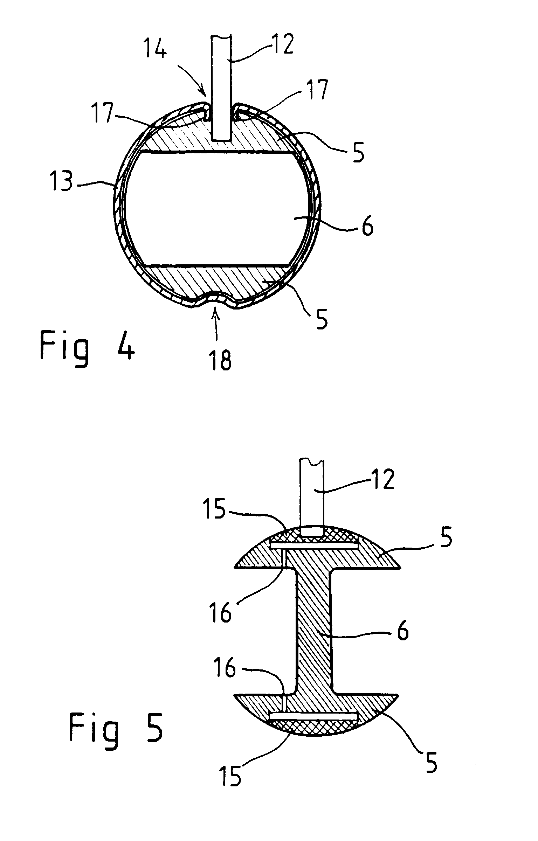

In Fig. 4 is depicted a particularly simple embodiment of the invention. Herein the valve body and its entry passage and exit passage are constituted by a straight tube 13 in which the closing member has been placed, in other words, no separate valve body is required in this valve, and the valve can be formed at any point along the tube 13. The closing member comprises two opposed spherical calottes 5 and a closing plate 6 therebetween. A hole 14 has been made in the tube 13 and the apex of one spherical calotte has been placed in register with this hole. A stem 12 passes by the hole 14 through the tube 13 and is connected to the closing member for turning same in the tube 13.

In the embodiment of Fig. 4 the hole has been made only after installing the closing member in position, and the hole may in this instance be made by punching so that the hole margins 17 turn downward and penetrate into the calotte surface, thus locking the closing member in place. The calotte consists, of its central part at least, advantageously of suitably soft material, e.g. plastic or rubber. The closing member has in a similar way been fixed at the lower calotte by pressing or indenting the tube 13 at the centre 18 of the lower calotte. Since on this side no shaft need be carried through, it is enough to make a suitable indentation in the tube.

In Fig. 5 is depicted an embodiment of the invention which can be used in all and any valves according to the invention. In the region of the apex, or centre, of the spherical calottes 5 belongs a sealing member 15 of elastic material. The rear surface of this sealing element communicates by a passage 16 with the pressure side of the valve when the valve is closed. This makes the valve self-sealing when it is closed, and the pressure acting on the closing member at the same time urges the sealing element outward. In like manner, the sealing element on the edge of the closing plate 6 may communicate, through the same or separate passages, with the pressure side for increased sealing effect.

In the foregoing the invention has been described by way of example with the aid of the drawings, while different embodiments of the invention are feasible within the scope of the inventive idea delimited by the claims.

## Claims

1. A valve, comprising a valve body (1, 13) with entry (2) and exit passage (3), and a closing member (4) for closing and opening the valve, disposed to be turnable in the valve body by a turning shaft (12), characterized in that the closing member (4) comprises two spherical calottes (5) less than a hemisphere, and a closing plate (6) connecting them, of which the curved edges (7) form a substantially smooth continuation of the calottes' curvature.

2. Valve according to claim 1, characterized in that on the edges (7) of the closing plate (6) belongs a sealing element (8) which seals the closing member against the inner shell of the valve body (1).

3. Valve according to claim 1 or 2, characterized in that the curved outer surfaces of the spherical calottes (5) and the mating surfaces of the valve body (1) are matched to fit tightly to each other free of packings.

4. Valve according to claim 1 or 2, characterized in that a sealing element (9) belongs between the curved outer surfaces of the spherical calottes (5) and the mating surfaces of the valve body (1).

5. Valve according to claim 1, characterized in that on the edges (7) of the closing plate (6), continuing on the surface of the spherical calottes (5) substantially all around the closing member (4) belongs a packing groove (10) carrying a packing ring (11).

6. Valve according to claim 5, characterized in that the packing ring (11) consists of compound which has been injected into the packing groove (10) from the side of the turning shaft (12) of the closing member (4) and has hardened in said groove.

7. Valve according to any one of claims 1-6, characterized in that a turning shaft (12) has been provided on one of the spherical calottes (5) only, while the other rests freely against the inner shell of the valve body.

8. Valve according to any one of claims 1-6, characterized in that to both spherical calottes (5) belongs a turning shaft (12), at least one of them extending to the outside of the shell of the valve body (1) constituting a stem for turning the valve.

9. Valve according to any one of claims 1-8, characterized in that the valve body (1) has been pressed around the closing member (4) to form a completed valve.

10. Valve according to any one of claims 1-7, characterized in that the valve body consists of a straight tube (13) inside which the closing member has been mounted in its place.

11. Valve according to claim 10, characterized in that in the tube (13) belongs a hole (14) through which the shaft (12) turning the closing member enters the tube.

12. Valve according to any one of claims 1-11, characterized in that in the region of the calotte apex of the closing member belongs a sealing member (15).

13. Valve according to claim 12, characterized in that the rear of the sealing element (15) is by a passage (16) connected to the pressure side of the valve, whereby in the closed position of the valve the pressure urges the sealing element (15) towards the valve body.

14. Valve according to claim 13, characterized in that the rear of the sealing element on the curved edges of the closing plate communicates with the pressure side of the valve.

## Patentansprüche

1. Ventil mit einem Ventilgehäuse (1, 13) mit Einlaß- (2) und Auslaßkanal (3) und einem mit Hilfe einer Drehwelle (12) drehbar im Ventilgehäuse angeordneten Ventilglied (4) zum Schließen und Öffnen des Ventils, dadurch gekennzeichnet, daß das Ventilglied (4) zwei sphärische Kalotten (5) von weniger als einer Halbkugel und eine diese verbindende Schließplatte (6) aufweist, deren gekrümmte Ränder (7) eine im wesentlichen fließende Fortsetzung der Krümmung der Kalotten bilden.

2. Ventil nach Anspruch 1, dadurch gekennzeichnet, daß auf die Ränder (7) der Schließplatte (6) ein Dichtelement (8) gehört, das das Ventilglied gegen die Innenschale des Ventilgehäuses (1) abdichtet.

3. Ventil nach Anspruch 1 oder 2, dadurch gekennzeichnet, daß die gekrümmten äußeren Oberflächen der sphärischen Kalotten (5) und die dazu passenden Oberflächen des Ventilgehäuses (1) so aneinander angepaßt sind, daß sie ohne Packungen dicht aneinanderliegen.

4. Ventil nach Anspruch 1 oder 2, dadurch gekennzeichnet, daß ein Dichtelement (9) zwischen die gekrümmten äußeren Oberflächen der sphärischen Kalotten (5) und die daran angepaßten Oberflächen des Ventilgehäuses (1) gehört.

5. Ventil nach Anspruch 1, dadurch gekennzeichnet, daß auf die Ränder (7) der Schließplatte (6), fortgesetzt auf der Oberfläche der sphärischen Kalotten (5) im wesentlichen ganz um das Ventilglied (4) herum, eine Packungsnut (10) gehört, die einen Packungsring (11) trägt.

6. Ventil nach Anspruch 5, dadurch gekennzeichnet, daß der Packungsring (11) aus einer Verbindung besteht, die von der Seite der Drehwelle (12) des Ventilglieds (4) aus in die Packungsnut (10) injiziert worden ist und darin ausgehärtet ist.

7. Ventil nach einem der Ansprüche 1 bis 6, dadurch gekennzeichnet, daß eine Drehwelle (12) nur an einer der sphärischen Kalotten (5) vorgesehen worden ist, während die andere frei an der Innenschale des Ventilgehäuses anliegt.

8. Ventil nach einem der Ansprüche 1 bis 6, dadurch gekennzeichnet, daß zu beiden sphärischen Kalotten (5) eine Drehwelle (12) gehört, von denen sich wenigstens eine zur Außenseite der Schale des Ventilgehäuses (1) erstreckt und einen Schaft zum Drehen des Ventils bildet.

9. Ventil nach einem der Ansprüche 1 bis 8, dadurch gekennzeichnet, daß das Ventilgehäuse (1) um das Ventilglied (4) herumgepreßt worden ist, um ein vollständiges Ventil zu bilden.

10. Ventil nach einem der Ansprüche 1 bis 7, dadurch gekennzeichnet, daß da den Rohr (13) besteht, in dessen Innerem das Ventilglied in seiner Position montiert worden ist.

11. Ventil nach Anspruch 10, dadurch gekennzeichnet, daß in das Rohr (13) ches die Welle (12) zum Drehen des Ventilglieds in das Rohr eintritt.

12. Ventil nach einem der Ansprüche 1 bis 11, dadurch gekennzeichnet, daß in den Bereich des Scheitels der Kalotte des Ventilglieds ein Dichtelement (15) gehört.

13. Ventil nach Anspruch 12, dadurch gekennzeichnet, daß die Rückseite des Dichtelements (15) durch einen Kanal (16) mit der Druckseite des Ventils verbunden ist, wodurch in der geschlossenen Position des Ventils der Druck das Dichtelement (15) gegen das Ventilgehäuse andrückt.

14. Ventil nach Anspruch 13, dadurch gekennzeichnet, daß die Rückseite des Dichtelements auf den gekrümmten Rändern der Schließplatte mit der Druckseite des Ventils in Verbindung steht.

## Revendications

1. Vanne comprenant un corps de vanne (1, 13) possédant un passage d'entrée (2) et un passage de sortie (3), et un organe de fermeture (4) pour fermer et ouvrir la vanne, disposé de façon à pouvoir être tourné dans le corps de vanne par un arbre rotatif (12), caractérisée en ce que l'organe de fermeture (4) comprend deux calottes sphériques (5) représentant chacune moins d'un hémisphère, et une plaque de fermeture (6) qui les relie et dont les bords incurvés (7) forment un prolongement pratiquement lisse de la courbure des calottes.

2. Vanne selon la revendication 1, caractérisée en ce qu'un élément d'étanchéité (8) qui réalise une étanchéité entre l'organe de fermeture et l'enveloppe intérieure du corps de vanne (1) est disposé sur les bords (7) de la plaque de fermeture (6).

3. Vanne selon la revendication 1 ou 2, caractérisée en ce que les surfaces courbes extérieures des calottes sphériques (5) et les surfaces conjuguées du corps de vanne (1) sont conçues pour former un ajustement serré les unes avec les autres, sans garniture d'étanchéité.

4. Vanne selon la revendication 1 ou 2, caractérisée en ce qu'un élément d'étanchéité (9) est disposé entre les surfaces courbes extérieures des calottes sphériques (5) et les surfaces conjuguées du corps de vanne (1).

5. Vanne selon la revendication 1, caractérisée en ce qu'une gorge pour garniture d'étanchéité (10) contenant un anneau d'étanchéité (11) est aménagée sur les bords (7) de la plaque de fermeture (6), qui prolongent la surface des calottes sphériques (5) pratiquement tout autour de l'organe de fermeture (4).

6. Vanne selon la revendication 5, caractérisée en ce que l'anneau d'étanchéité (11) consiste en un composé qui a été injecté dans la gorge pour garniture d'étanchéité (10) à partir du côté de l'arbre rotatif (12) de l'organe de fermeture (4), et qui a durci dans ladite gorge.

7. Vanne selon l'une quelconque des revendications 1 à 6, caractérisée en ce qu'un arbre rotatif (12) a été prévu sur une seule des calottes sphériques (5), tandis que l'autre repose librement contre l'enveloppe intérieure du corps de vanne.

8. Vanne selon l'une quelconque des revendications 1 à 6, caractérisée en ce qu'on a prévu un arbre rotatif (12) sur chacune des deux calottes sphériques (5), au moins l'un d'entre eux s'étendant vers l'extérieur de l'enveloppe du corps de vanne (1) et constituant une tige pour faire tourner la vanne.

9. Vanne selon l'une quelconque des revendications 1 à 8, caractérisée en ce que le corps de vanne (1) a été pressé autour de l'organe de fermeture (4) de façon à former une vanne complète.

10. Vanne selon l'une quelconque des revendications 1 à 7, caractérisée en ce que le corps de vanne consiste en un tube rectiligne (13) à l'intérieur duquel a été mis en place l'organe de fermeture.

11. Vanne selon la revendication 10, caractérisée en ce qu'un trou (14) a été aménagé dans le tube (13), trou par lequel l'arbre (12) qui fait tourner l'organe de fermeture pénètre dans le tube.

12. Vanne selon l'une quelconque des revendications 1 à 11, caractérisée en ce qu'un organe d'étanchéité (15) est disposé dans la région du sommet de la calotte de l'organe de fermeture.

13. Vanne selon la revendication 12, caractérisée en ce que l'arrière de l'élément d'étanchéité (15) est relié, par un passage (16), au côté de la vanne qui est soumis à pression, ce grâce à quoi, dans la position fermée de la vanne, la pression pousse l'élément d'étanchéité (15) en direction du corps de vanne.

14. Vanne selon la revendication 13, caractérisée en ce que l'arrière de l'élément d'étanchéité disposé sur les bords incurvés de la plaque de fermeture communique avec le côté de la vanne qui est soumis à pression.
